# EUROPÄISCHE PATENTSCHRIFT

(11) **EP 0 379 465 B1**
(45) Veröffentlichungstag und Bekanntmachung des Hinweises auf die Patenterteilung: **28.07.1993**
(21) Anmeldenummer: 90810018.3
(22) Anmeldetag: 09.01.1990
(51) Int. Cl.: D01G 31/00, F16P 1/02, F16P 3/14

(54) **Ballenabtragmaschine mit einer Sicherheitseinrichtung**
Fibre bale opener with a safety device
Ouvreuse de balles avec un dispositif de sécurité

(30) Priorität: 16.01.1989 CH 120/89; 11.08.1989 CH 2956/89; 13.11.1989 CH 4164/89
(43) Veröffentlichungstag der Anmeldung: 25.07.1990
(73) Patentinhaber: MASCHINENFABRIK RIETER AG, CH-8406 Winterthur (CH)
(72) Erfinder: Binder, Rolf, CH-8352 Räterschen (CH); Hanselmann, Daniel, CH-8406 Winterthur (CH); Anderegg, Peter, CH-8405 Winterthur (CH); Schlepfer, Walter, CH-8406 Winterthur (CH); Kyburz, Martin, CH-8450 Andelfingen (CH); Demuth, Robert, CH-8309 Nürensdorf (CH); Gloor, Thomas, CH-8406 Winterthur (CH); Aebli, Jost, CH-8408 Winterthur (CH)
(74) Vertreter: Finsterwald, Manfred, Dipl.-Ing., Dipl.-Wirtsch.-Ing.

(56) Entgegenhaltungen:
- EP-A- 0 203 040
- CH-A- 493 783
- DE-A- 1 502 341
- DE-A- 2 343 096
- DE-A- 3 034 589
- DE-A- 3 135 272
- DE-A- 3 205 394
- DE-C- 854 290
- DE-U- 8 709 310
- FR-A- 2 233 423
- FR-A- 2 398 959
- FR-A- 2 489 375
- FR-A- 2 509 332
- GB-A- 1 101 880
- GB-A- 1 558 513
- US-A- 4 324 533

## Beschreibung

Die Erfindung liegt im Gebiet der industriellen Textilrohmaterial-Verarbeitung. Sie betrifft eine Ballenabtragmaschine gemäss dem Oberbegriff des Patentanspruchs 1.

Textilfaser-Rohmaterial, insbesondere Rohbaumwolle, wird meistens in Ballenform angeliefert. In einer vorgängigen Faseraufbereitung vor der Verspinnung muss das Rohmaterial in die Form loser Flocken gebracht werden. In diesem flockigen Zustand wird das Material anschliessend gereinigt und die Einzelfasern werden in einem Kardierungsprozess gestreckt und parallelisiert.

Die Auflockerung des ballenförmigen Rohmaterials und die sukzessive Abgabe desselben and die Reinigungs- und Kardierungsvorrichtungen werden in der Regel durch schichtweises Abtragen der Ballen mittels einer rasch rotierenden, mit Reiss-Nocken versehenen Abtragwalze bewerkstelligt. Solche Ballenabtragmaschinen sind beispielsweise mit einem Abtragorgan versehen, das von oben her über die in einer Reihe angeordneten Rohtextilballen geführt wird. Durch Hin- und Her-Bewegung des Abtragorgans über die Ballenreihe mit gleichzeitiger Absenkung wird das Rohmaterial von der Abtragwalze schichtweise abgetragen. Die gebildeten Flocken werden mittels eines Ventilators als Flockenstrom den nachfolgenden Vorrichtungen zugeführt.

Freiliegende Partien der rasch rotierenden Abtragwalze können für das Bedienungspersonal eine Gefahr sein, insbesondere dann, wenn das Personal unvorsichtig an der Maschine arbeitet. Diese Gefahr entsteht dann, wenn der gegen unten offene Bereich des Abtragorgans mit der Abtragwalze nicht vollständig und unmittelbar über den zu bearbeitenden Ballen liegt. Beispielsweise ist das dann der Fall, wenn das Abtragorgan am Ende der Ballenreihe angelangt ist, wenn eine Ballenreihe mit Ballen ungleicher Höhe bearbeitet wird oder wenn die Ausmasse der Ballen die Abtragwalze nicht völlig abschirmen.

Einerseits besteht die Gefahr von zu schmalen Ballen, d.h. Ballen, die sich nicht über die volle Breite des Abtragorgans erstrecken. In diesem Fall ergibt sich ein "Überstand des Abtragwalze" über den zu bearbeitenden Textilfaserballen. Andererseits besteht eine Gefahr an den seitlichen Bereichen des Abtragorgans, d.h. an den Seiten in Vorschubrichtung des Abtragorgans. Es erweist sich, dass das Anbringen von Schutzeinrichtungen an solchen Ballenabtragmaschinen mit Schwierigkeiten verbunden ist. Insbesondere bei mechanischen Schutzvorrichtungen stellt sich das Problem, dass diese nicht gegen Ballen anstehen oder mit anderen mechanischen Einrichtungen kollidieren dürfen.

Probleme stellen sich auch bei sensorischen Schutzeinrichtungen, da z.B. Änderungen des Ballenprofils bzw. die Ballen als eindringende Objekte erfasst werden. Daher wurde bei bekannten sensorischen Schutzkonzepten entweder die Ballenabtragmaschine inklusive der ganzen Ballenreihe als Gesamtheit überwacht oder die Sensoren erfassten nur limitierte Bereiche über den Ballen, womit wiederum nur ein unvollständiger Schutz erzielt wurde.

Aus dem deutschen Patent DE 3032584 ist eine Überwachungseinrichtung bekannt, welche den ganzen Bereich um die Ballenabtragmaschine und die Ballenreihen abschirmt. Ein Lichtstrahl wird von einem Sender ausgestrahlt, mehrfach umgelenkt (reflektiert) und von einem beim Sender liegenden Empfänger registriert, so dass der Strahlengang geschlossen ist. Der umgelenkte Lichtstrahl definiert somit ein Überwachungsgebiet das wesentlich grösser ist, als der eigentliche Gefahrenbereich, d.h. der Bereich unter dem Abtragorgan. Obwohl bei dieser Einrichtung Massnahmen getroffen werden, den abgeschirmten Bereich möglichst klein zu halten (Umschalten zwischen zwei Überwachungsbereichen), ist in der Regel ein zu grosses Überwachungsgebiet erfasst, was zu unnötigen Unterbrechungen des Betriebs führen kann. Zudem besteht die Gefahr, dass der den Gefahrenbereich überwachende Lichtstrahl durch Personen *über*schritten wird oder dass unter diesem hindurchgegangen wird. Ausserdem kann eine sich schon vor dem Einschalten der Maschine innerhalb des Überwachungsgebiets befindende Person nicht mehr erfasst werden. Das System ist zudem auf eine sehr präzise Anordnung der Spiegel angewiesen und ist mithin störanfällig (Verbiegen/Verstellen der Spiegel).

Eine andere Schutzvorrichtung ist aus der DE Offenlegungsschrift 37 33 972 bekannt. Ein stromdurchflossener, elektrischer Leiter ist um das Abtragorgan geführt und erzeugt ein elektromagnetisches Feld. Die durch herannahende Personen bewirkte Feldänderung soll durch eine Kontrollvorrichtung festgestellt werden. Letztere betätigt dann einen Endschalter. Da die Anordnungsmöglichkeiten des Leiters beschränkt sind, kann diese Vorrichtung nur einen limitierten Raum erfassen, welcher grundsätzlich auf einen Bereich über und seitlich der Öffnung für die Abtragwalzen beschränkt ist. Besonders nachteilig erweist sich die Tatsache, dass von unten in den Gefahrenbereich eindringende Personen unter Umständen überhaupt nicht detektiert werden oder das Messfeld müsste so stark ausgedehnt werden, dass wiederum unnötige Unterbrechungen verursachende Gebiete um das Abtragorgan miterfasst werden. Ungelöst ist hier das Problem, dass auch Ballen grundsätzlich durch den Sensor erfasst werden, sofern das Feld ausgedehnt wird. Konstruktionsbedingt kann daher nur ein beschränkter Bereich über den Ballen überwacht werden kann, was bedeutet, dass der Schutz unvollständig bleibt. Ausserdem ist auch die Frage der Selbstüberwachung ungelöst.

Des weiteren sind mechanische Schutzklappen für Abtragwalzen bekannt, die innerhalb des Gehäuses des Abtragorgans vorgesehen sind. Bei Abtragorganen neuerer Konstruktion, die mit mehreren, beispielsweise zwei Abtragwalzen versehen sind, ist eine solche Vorrichtung aus Platzgründen nicht realisierbar.

Es zeigt sich, dass der eigentliche Gefahrenbereich bei einer Ballenabtragmaschine relativ klein ist und im wesentlichen nur das Gebiet unter dem Abtragorgan bzw. den Abtragwalzen umfasst. Dementsprechend sollte auch der Überwachungsbereich möglichst diesem Gefahrenbereich entsprechen, insbesondere wenn entsprechende Schutzmittel ausserhalb des Gehäuses des Abtragorgans angeordnet sind. Diesem Aspekt wird durch bisherige Vorrichtungen nicht Rechnung getragen.

Es ist Aufgabe der Erfindung, eine Schutzeinrichtung zu schaffen, welche einen zuverlässigen Schutz des Gefahrenbereichs gewährleistet, wobei der Überwachungsbereich in optimierter Form minimal gehalten werden soll.

Diese Aufgabe wird durch die im kennzeichnenden Teil des Patentanspruchs 1 genannten Merkmale gelöst.

Die Erfindung zeichnet sich dadurch aus, dass der problematische Gefahrenraum durch Sensoren und/oder mechanische Mittel zuverlässig abgeschirmt wird, so dass es nicht möglich ist, in das Gefahrengebiet einzudringen ohne dass dies durch die Schutzeinrichtung detektiert bzw. verhindert würde. Die Erfindung ermöglicht es, das Überwachungsgebiet ganz *zu schliessen*. Die Schutzeinrichtung ist ausserdem derart ausgestaltet, dass variierende Ballenprofile auf erstere keinen störenden Einfluss ausüben können. Ein weiterer bedeutender Vorteil liegt darin, dass sich die Schutzeinrichtung selbst überwacht, d.h. dass insbesondere Ausfälle der Sensoren keine Einbusse in der Schutzwirkung bewirken und/oder sofort erkannt werden. Zudem erfolgt die Anordnung der Schutzeinrichtung derart, dass der Überwachungsbereich nur minimal grösser als der Gefahrenbereich ist. Derart können unnötige Abschaltungen vermieden werden.

Gleichzeitig besitzt die Schutzeinrichtung den Vorteil, dass sie auch für Abtragorgane mit zwei oder mehr Abtragwalzen oder besonderer geometrischer Form anwendbar sind.

Anhand nachfolgender Figuren sind Ausführungsbeispiele der Erfindung näher erläutert.
- Fig. 1: zeigt eine Darstellung einer herkömmlichen Textilfaserballen-Abtragmaschine in Seitenansicht;
- Fig. 2: ist eine Darstellung dieselbe Maschine von oben gesehen. Das gefährliche Gebiet ist schraffiert eingezeichnet;
- Fig. 3: zeigt in schematischer Darstellung eine Ballenabtragmaschine mit zwei seitlichen Überwachungsbereichen;
- Fig. 4: zeigt in schematischer Darstellung eine Ballenabtragmaschine mit zwei seitlichen und einem dazwischenliegenden Überwachungsbereich;
- Fig. 5: zeigt eine Darstellung einer mechanischen Schutzvorrichtung gegen Zugriff von vorne mittels eines vertikal angeordneten Schutzschildes;
- Fig. 6: ist ebenfalls eine Darstellung einer mechanischen Schutzvorrichtung mittels eines stirnseitig, horizontal angeordneten Schutzschildes;
- Fig. 7: zeigt eine Darstellung einer mechanischen Schutzvorrichtung, welche durch einen mechanischen Schutzvorhang realisiert ist, der über das Abtragorgan ausgebreitet ist;
- Fig. 8: zeigt eine Darstellung einer mechanischen Schutzvorrichtung gegen seitlichen Zugriff mittels flexibler Schutzplatten;
- Fig. 9: zeigt ein Ausführungsbeispiel einer mechanischen Schutzeinrichtung mit seitlich angeordneten, schwenkbaren Schutzplatten;
- Fig. 10: zeigt ein Ausführungsbeispiel einer mechanischen Schutzeinrichtung mit seitlich angeordneten, schwenkbaren und auf Führungsrollen geführten Schutzplatten;
- Fig. 11: zeigt eine mechanische Schutzeinrichtung, die als absenkbarer Rost ausgebildet ist;
- Fig. 12: zeigt eine mechanische Schutzeinrichtung mit einer flexiblen, über die Abtragwalzen bringbaren Abdeckung;
- Fig. 13: zeigt eine passive sensorische Überwachung der Vorderseite des Abtragorgans durch Infrarotdetektoren;
- Fig. 14: stellt eine aktive sensorische Überwachung der Vorderseite des Abtragorgans durch optische oder auf Ultraschallwandlern beruhenden Sende- und Empfänger-Vorrichtungen dar;
- Fig. 15: zeigt eine Vorrichtung zur sensorischen Überwachung mit Strahlumlenkung durch einen Bodenreflektor;
- Fig. 16: zeigt zwei prinzipielle Anordnungsmöglichkeiten der Sensoren (horizontal und vertikal orientierte Schutzvorhänge);
- Fig. 17: zeigt eine Ballenabtragmaschine mit vier horizontal und zwei vertikal ausgerichteten Ultraschallsensoren;
- Fig. 18: zeigt eine Ballenabtragmaschine mit je zwei seitlichen, vertikal orientierten Ultraschallsensoren und mit Ultraschallsensoren für einen stirnseitigen Schutzvorhang;
- Fig. 19: zeigt eine Ballenabtragmaschine mit einer an einem Bügel über dem Abtragorgan angeordneten Sensorik;
- Fig. 20: zeigt ein Ausführungsbeispiel mit horizontal orientierten Schutzvorhängen und einer stirnseitigen Schutzplatte;
- Fig. 21: zeigt ein Ausführungsbeispiel mit einem passiven optischen Sensorsystem und vertikal orientiertem Schutzvorhang;
- Fig. 22: zeigt ein Ausführungsbeispiel mit einem Selbstüberwachungssystem.

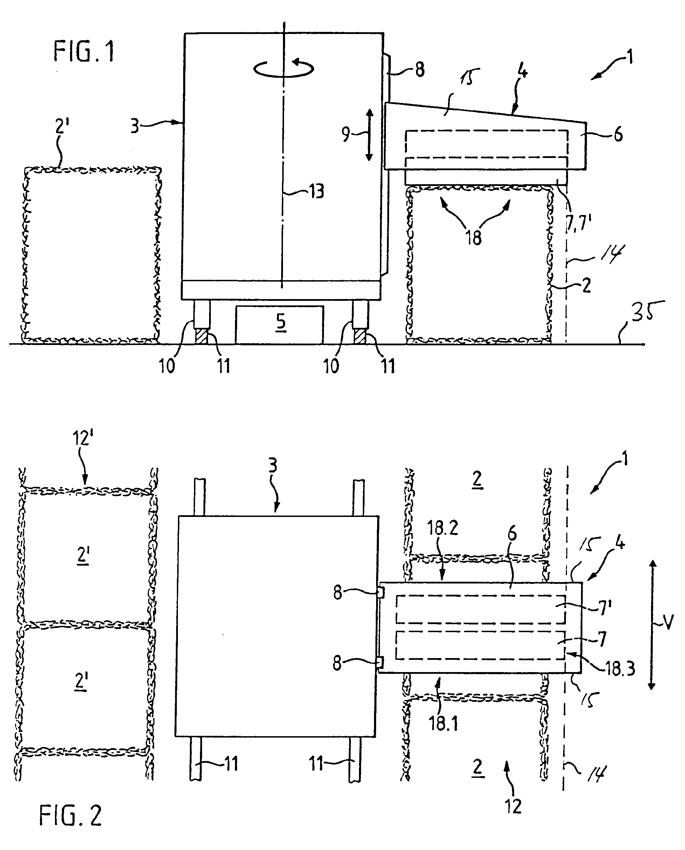

Die Figuren 1 und 2 veranschaulichen ein Beispiel des Aufbaues einer herkömmlichen Textilfaserballen-Abtragmaschine in Seitenansicht (Fig. 1) und von oben (Fig. 2). Diese Maschine 1 zum Abtragen von Textilfasern, die als Faserballen 2, 2' vorliegen, umfasst ein Maschinengestell 3 mit einem Abtragorgan 4 und einen Flockentransportkanal 5. Das Maschinengestell zusammen mit dem Abtragorgan 4 ist in den zwei Vorschubrichtungen V bewegbar.

Das Abtragorgan 4 selbst umfasst eine Gehäusekonstruktion 6, in welcher eine oder mehrere rotierende Abtragwalzen 7, 7' antreibbar gelagert sind. Die durch die Abtragwalze von den Faserballen 2 abgetragenen Faserflocken, werden durch die Gehäusekonstruktion 6 geführt und durch eine nicht eingezeichnete Ventilationsvorrichtung in den Flockentransportkanal 5 gefördert. Das Abtragorgan 4 ist längs einer Führungsschiene 8 in vertikaler Richtung (in Fig 1 durch die Pfeilrichtung 9 bezeichnet) verschiebbar, um es auf die Ballen aufsetzen, davon abheben und um es in der variablen Abtraghöhe bewegen zu können. Ausserdem ist der obere Teil der Gehäusekonstruktion um eine vertikale Achse 13 drehbar, so dass das Abtragorgan um 180° so gedreht werden kann, dass eine auf der Gegenseite angeordnete, zweite Reihe von Faserballen 2' abgetragen werden kann.

Das Maschinengestell 3 ist auf der Unterseite mit antreibbaren Rädern 10 versehen, welche es gestatten, die Textilfaserballen-Abtragmaschine 1 auf einer Schiene 11 entlang einer Faserballenreihe 12, 12' (vgl. Fig. 2) zu verschieben. Die Schienen 11 sind hier direkt auf dem Boden 35 angebracht. Durch Hin- und Her-Bewegung der ganzen Maschine 1 und gleichzeitiges Senken des Abtragorgans 4 können die in Reihe angeordneten Faserballen 2,2' schichtweise abgetragen werden. Die Faserflocken werden kontinuierlich über den Flockentransportkanal 5 einer Weiterbearbeitung zugeführt.

Die Abtragwalzen 7, 7' des Abtragorgans 4 sind derart ausgelegt, dass sie möglichst genau mit der üblichen Breite der Faserballenreihe 12, 12' übereinstimmen, wie das mit der gestrichelten Linie 14 in Fig. 1 und Fig 2 eingezeichnet ist. Dies entspricht einer üblichen Normbreite. In diesem Falle sind die rotierenden Abtragwalzen 7, 7' dank Seitenplatten 15 während des Ballenabtrages weitgehend verdeckt, denn die Seitenplatten 15 der Gehäusekonstruktion 6 verdecken die Abtragwalzen 7, 7' über die ganze Länge, abgesehen von einer spaltförmigen Öffnung an der Unterseite, die zum Abtragen freigegeben ist.

Die Breite der Faserballenreihe 12 ist aber trotz Normierung stets etwas kleiner als diejenige der Abtragwalzen 7, 7' wie das, etwas übertrieben gezeichnet, mit der Linie 14 angedeutet ist. Es bleibt somit stirnseitig, zwischen Abtragwalze 7 und der Kante der Faserballenreihe 12 ein Freiraum, in dem die rasch rotierende, mit Rupf-Nocken besetzten Abtragwalzen 7, 7' während des Betriebes mehr oder weniger zugänglich sind. Hier entsteht ein stirnseitiger Gefahrenbereich 18.3.

Die rasch rotierenden, mit Rupf-Nocken besetzten Abtragwalzen 7, 7' des Abtragorgans 4 stellen aber auch in den seitlichen Bereichen des Abtragorgans ein erhebliches Gefahrenpotential dar, sobald das Abtragorgan z.B. über die Ballenreihe hinausfährt oder von dieser abgehoben wird.

Es ist somit für das Bedienungspersonal, eine Gefahrenzone 18 vorhanden, in welche während des Betriebes mit den Händen oder einem Werkzeug eingedrungen werden kann, was unbedingt verhindert werden soll. Ziel der Erfindung ist es, für den gesamten Gefahrenbereich, d.h. den Stirnbereich 18.3 und die seitlichen Bereiche 18.1, 18.2 dieses Gefahrenbereichs eine sichere und zuverlässige Schutzeinrichtung vorzusehen.

Das erfindungsgemässe Schutzprinzip sieht folgendes vor. Die Gefahrenzone 18 wird mit mechanischen Mitteln abgeschirmt und/oder es werden durch sensorische Mittel Schutzmassnahmen ergriffen, d.h. insbesondere die Rotationsbewegung der Abtragwalzen 7, 7' abgeschaltet, sobald sich ein Fremdobjekts der Gefahrenzone 18 nähert. Dabei wird berücksichtigt, dass sich der Gefahrenbereich bei der beschriebenen Geometrie der Maschine *unter* der Gehäusekonstruktion 6 des Abtragorgans 4 befindet.

Wenngleich die Erfindung im folgenden anhand der vorstehend beschriebenen Ballenabtragmaschine erläutert wird, muss betont werden, dass sich die Erfindung auch mit anderen Textilmaschinen einsetzen lässt. Prinzipiell kann die Erfindung zusammen mit allen bearbeitenden Maschinen, insbesondere mit fahrbaren, bearbeitenden Maschinen verwendet werden. Es ist aber auch möglich, bspw. eine Ballenabtragmaschine starr anzuordnen und die Ballen bspw. auf einem Förderband relativ zur Maschine zu bewegen.

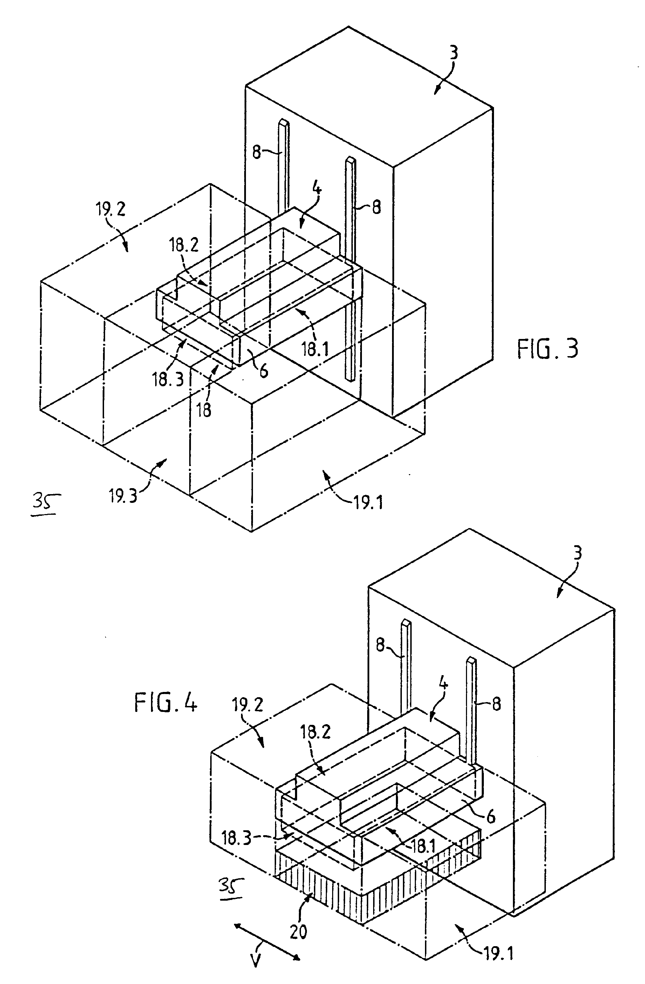

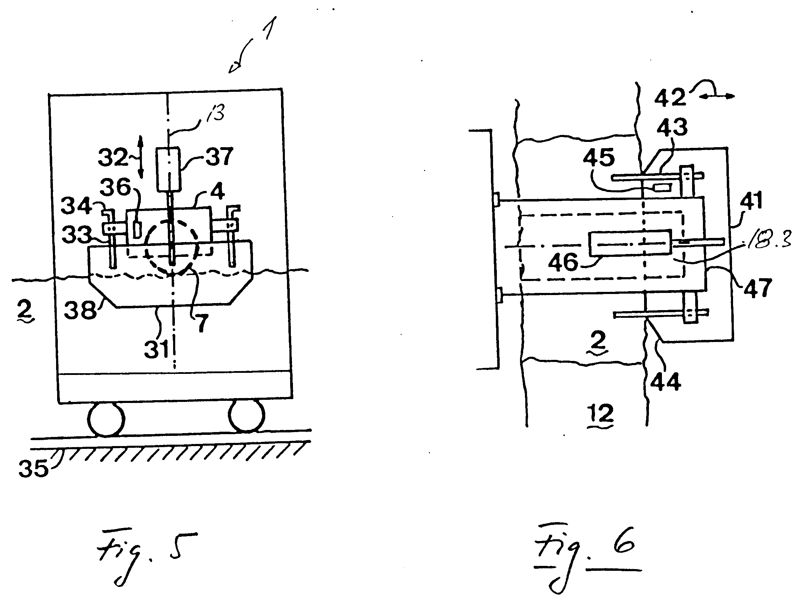

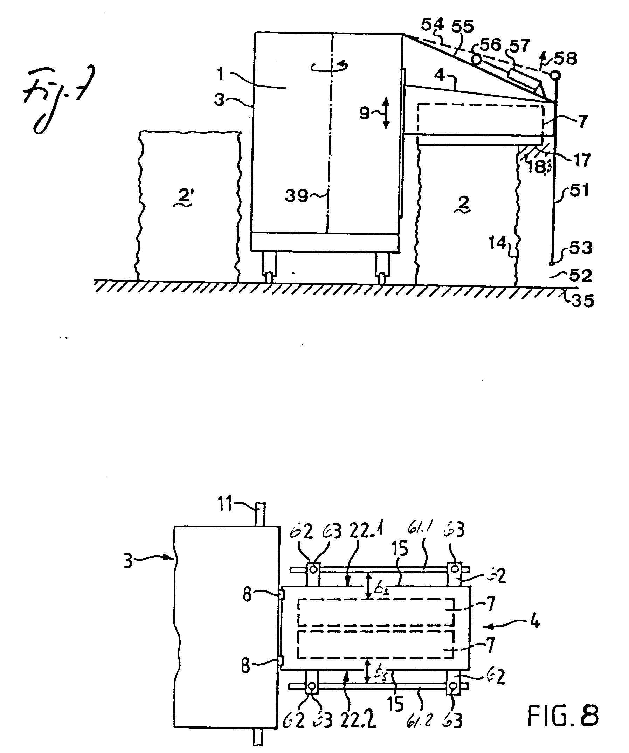

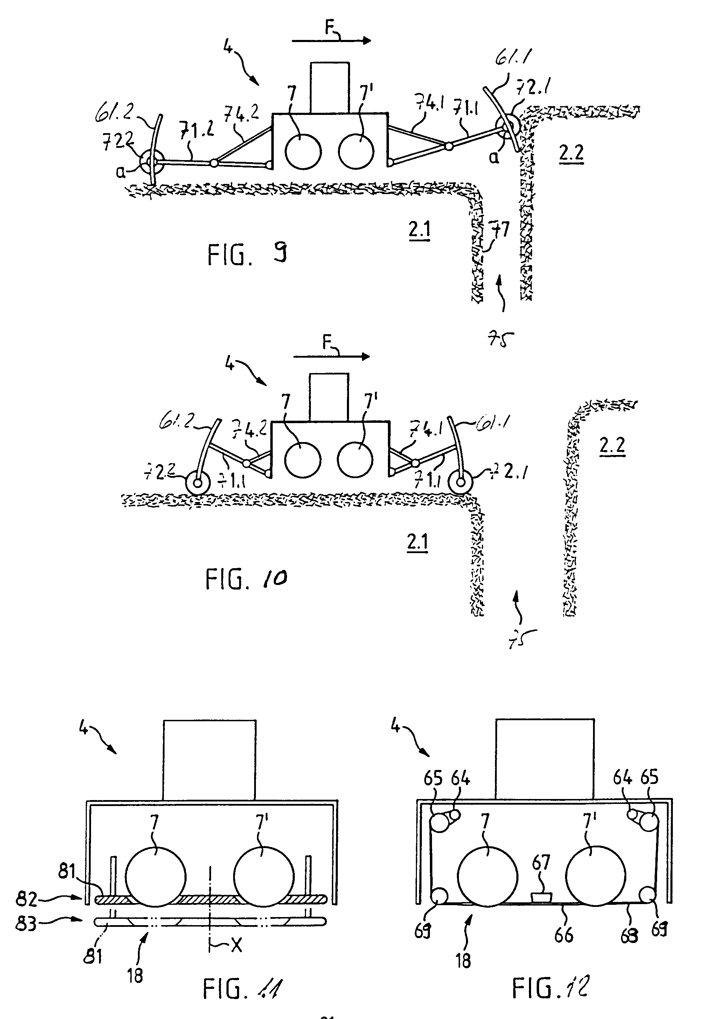

Figur 3 zeigt in schematischer Weise das Konzept der vorliegenden Erfindung. Der eigentliche Gefahrenbereich 18, der die hier nicht eingezeichneten Abtragwalzen umschliesst, ist durch eine gestrichelte Linie angedeutet. Es ist gut ersichtlich, dass ein grosser Teil des Gefahrenbereichs 18 durch die Gehäusekonstruktion 6 des Abtragorgans 4 abgedeckt ist. Eine Verletzungsgefahr für Bedienungspersonen oder aber auch ein Beschädigen der Walzen durch eindringende Gegenstände kann hier nur von unten her erfolgen. In diesem unteren Bereich können wiederum 3 Zonen unterschieden werden. Einerseits ist dies der stirnseitige Bereich 18.3, andererseits die beiden seitlichen Bereiche 18.1, 18.2, die hier je in Vorschubrichtung des Abtragorgans liegen.

Gemäss der Erfindungsaufgabe sollen Schutzmassnahmen für den gesamten Gefahrenbereich 18 getroffen werden. Es soll mit anderen Worten sichergestellt werden, dass ein Eindringen die unteren, seitlichen Gefahrenbereich 18.1, 18.2 sowie in den stirnseitigen Gefahrenbereich 18.3 verhindert wird. Die Erfindungsidee geht nun davon aus, dass zur Erreichung eines Maximalschutzes ein Überwachungsgebiet durch mechanische Schutzmittel abgeschirmt wird und/oder durch Sensoren derart überwacht wird, dass das derart definierte Überwachungsgebiet zusammen mit festen Bauelementen (Gehäuse, etc.), Boden und allfälligen zusätzlichen Schutzeinrichtungen einen lückenlosen Übergang bildet oder in sich geschlossen ist. D.h. es wird angestrebt, den Gefahrenbereich durch eine topologisch geschlossene Schutzhülle, bestehend aus Sensorbereichen, mechanischen Schutztmitteln und eventuell weiteren festen Elementen (Ballen, Maschine, etc.), zu umschliessen. Das Überwachungsgebiet ist dann mit anderen Worten *geschlossen*.

Dazu wird erfindungsgemäss ein topologisch geschlossener Überwachungsbereich vorgesehen, der seitliche Bereiche 19.1, 19.2 und den Stirnbereich 19.3 umfasst. Es wird so verhindert, dass ein Gegenstand seitlich oder von vorne in den Gefahrenbereich 18 eindringen könnte, ohne dass er durch die mechanischen Schutzmittel daran gehindert würde und/oder durch die Sensoren detektiert würde. Bei Annäherung eines Objektes in die Gefahrenzone und Erfassung durch die sensorischen Schutzmittel werden Schutzmassnahmen ergriffen, bspw. die Walzen durch eine Schnellabschaltung zum Stillstand gebracht.

Der Schutz von eindringenden Objekten ist wie folgt gewährleistet. Entweder wird das Objekt durch die mechanischen Schutzmittel von einem Eindringen in den Gefahrenbereich gänzlich abgehalten. In Bereichen, wo mechanische Schutzmittel nicht angeordnet werden können oder wo deren Wirkung beschränkt ist, wird die Überwachung durch sensorische Schutzmittel realisiert. Schliesslich werden feste Maschinenteile, Ballen, etc. in das Schutzkonzept miteinbezogen, d.h. sie übernehmen die Funktion eines mechanischen Schutzes. Unter Umständen kann die Wirkung von mechanischen *und* sensorischen Schutzmitteln an besonders exponierten Stellen kombiniert werden, d.h. es wird dort eine aktive Redundanz der Schutzmittel vorgesehen.

In denjenigen Bereichen des Überwachungsgebiets, die durch sensorische Schutzmittel erfasst werden, muss ein Objekt frühzeitig erfasst werden, damit die Schutzmassnahme rechtzeitig ergriffen und ihre Wirkung entfalten kann. Den Grund dafür bildet die der Maschine immanente mechanische Trägheit. Dies führt dazu, dass das Überwachungsgebiet 19 in der Regel grösser sein muss, als der Gefahrenbereich 18. Das zu überwachende Gebiet 19.1, 19.2, 19.3, welches den Gefahrenbereichen 18.1, 18.2, 18.3 vorgelagert ist, ist in Figur 3 schematisch durch strichpunktierte Linien angedeutet. Die Grösse und Form des Überwachungsgebiets kann variieren und ist in Abhängigkeit der grösstmöglichen Relativgeschwindigkeit zwischen dem Gefahrenfeld und dem eindringenden Gegenstand (z.B. Hand) und der erforderlichen Zeit bis die Gefahrenquelle beseitigt wird, zu bestimmen. Dabei muss eine notwendige, in der Regel behördlich vorgeschriebene Sicherheitsdistanz (bspw. Armlänge) vom Gefahrenbereich eingehalten werden. Die Erfindung berücksichtigt die Forderung nach einem optimierten Überwachungsbereich, d.h. bei hoher Sicherheit kann das Überwachungsgebiet minimiert werden, so dass im Betrieb keine unnötigen Abschaltungen erfolgen.

Das bspw. in Figur 3 eingezeichnete seitliche Überwachungsgebiet 19.1, 19.2, 19.3 bildet einen lückenlosen Übergang zum Maschinengestell 3, der Gehäusekonstruktion 6 und dem Boden 35. Im Gegensatz zu herkömmlichen Schutzeinrichtungen bestehen damit keine "Umgehungsmöglichkeiten" in den Gefahrenbereich hinein. Selbstverständlich bietet die Erfindung die Möglichkeit, das Überwachungsgebiet verschieden anzuordnen. Insbesondere können die seitlichen Überwachungsgebiete 19.1, 19.2 nicht bis zum Boden reichen (Fig. 4). Diesfalls wird ein zusätzliches, unter dem Abtragorgan 4 liegendes Überwachungsgebiet 20 vorgesehen, dass die beiden seitlichen Gebiete 19.1, 19.2 lückenlos verbindet. Dieses Überwachungsgebiet 20 wird in analoger Weise mittels einem mindestens annähernd parallel zu einer horizontalen Ebene bzw. zur bearbeitenden Fläche der Maschine verlaufenden Schutzvorhang überwacht.

Mit mechanischen Schutzmitteln können besonders gefährdete Stellen höchst zuverlässig gesichert werden. Ausserdem können zur Überwachung mehrere Sensoren derart angeordnet werden, dass sie mindestens einen Schutzvorhang bilden, der zusammen mit festen Teilen (Boden, Maschinengestell, etc.) und ev. in Kombination mit diesen mechanischen Schutzmitteln das Überwachungsgebiet vollständig erfasst. Gesamthaft bilden die mechanischen und sensorischen Schutzmittel somit den topologisch geschlossenen Überwachungsbereich. Es ist jedoch zu beachten, dass sowohl sensorische Schutzmittel als auch mechanische Schutzmittel in bevorzugten Ausführungsformen der Erfindung je für sich alleine vorgesehen werden können.

Der Übersichtlichkeit halber soll die Beschreibung wie folgt gegliedert werden:
1. Mechanische Schutzmittel (ohne zusätzliche sensorische Schutzmittel)
   A. Mechanische Schutzmittel für den Stirnbereich
   B. Mechanische Schutzmittel für die Seitenbereiche
   C. Mechanische Schutzmittel für Stirn- und Seitenbereiche
2. Sensorische Schutzmittel (ohne zusätzliche mechanische Schutzmittel)
   A. Sensorische Schutzmittel für den Stirnbereich
   B. Sensorische Schutzmittel für die Seitenbereiche
3. Kombination von mechanischen und sensorischen Schutzmitteln
4. Selbstüberwachung

### 1. Mechanische Schutzmittel (ohne zusätzliche sensorische Schutzmittel)

Bei der Verwendung mechanischer Schutzmittel zur Abgrenzung des Überwachungsbereichs muss der der Tatsache Rechnung getragen werden, dass der Abtragbereich, d.h. der Arbeitsbereich, während des Arbeitsvorgangs nicht behindert werden darf. Dazu kommen Probleme des variierenden Ballenprofils in der Ballenreihe. Da das Abtragorgan während des Abtragprozesses entlang der Ballenreihe bewegt wird, erweist sich vor allem auch die seitliche Abschirmung der Walzen, d.h. in Bewegungsrichtung als ein Problem. Im Rahmen der Erfindung sollen die Schutzmöglichkeiten möglichst am Abtragorgan selber oder an der eigentlichen Ballenabtragmaschine vorgesehen werden. Dies bietet einen konstruktiven Vorteil, indem zusätzliche freistehende Einrichtungen nicht notwendig sind.

Der Gefahrenbereich unter den Abtragwalzen soll mit mechanischen Mitteln so geschützt werden, dass diese einerseits beim Vorschub des Abtragorgans über die Ballen nicht behindernd sind und andererseits der durch sie abgedeckte Überwachungsbereich möglichst dem Gefahrenbereich entspricht. Dazu werden entweder an den seitlichen und/oder stirnseitigen Bereichen des Abtragorgans gegen unten ragende mechanische Schutzschilder vorgesehen oder unmittelbar unter den Abtragwalzen den Gefahrenbereich abschirmende Schutzmittel so vorgesehen, dass Personen oder deren Gliedmasse nicht in den gefährlichen Bereich der Abtragwalzen gelangen können. Damit die variierenden Ballenprofile und andere Unregelmässigkeiten der Ballen berücksichtigt werden können, sollen sich diese Schutzmittel gegenüber Faserballen neutral verhalten. Dies bedeutet, dass das die Schutzmittel entweder Ballen-Hindernissen (seitliche Flanken von nachfolgenden Ballen) ausweichen bzw. über das Ballenprofil geführt werden.

Der Vorteil mechanischer Schutzmittel besteht darin, dass sie ein Eindringen in den Gefahrenbereich verunmöglichen, so dass ein Unterbrechen des Arbeitsprozesses nicht erforderlich wird. Ein weiterer Vorteil bedeutet ihre hohe Zuverlässigkeit, so dass eine Selbstüberwachung nur in Ausnahmefällen vorgesehen werden muss. Im Rahmen der Erfindung wird vorgesehen, fest fixierte oder bewegliche mechanische Schutzvorrichtungen einzusetzen. Ein weiterer Vorteil derselben ist die klare visuelle Erkennbarkeit der Schutzvorrichtung und damit des Gefahrenbereichs.

### A. Mechanische Schutzmittel für den Stirnbereich

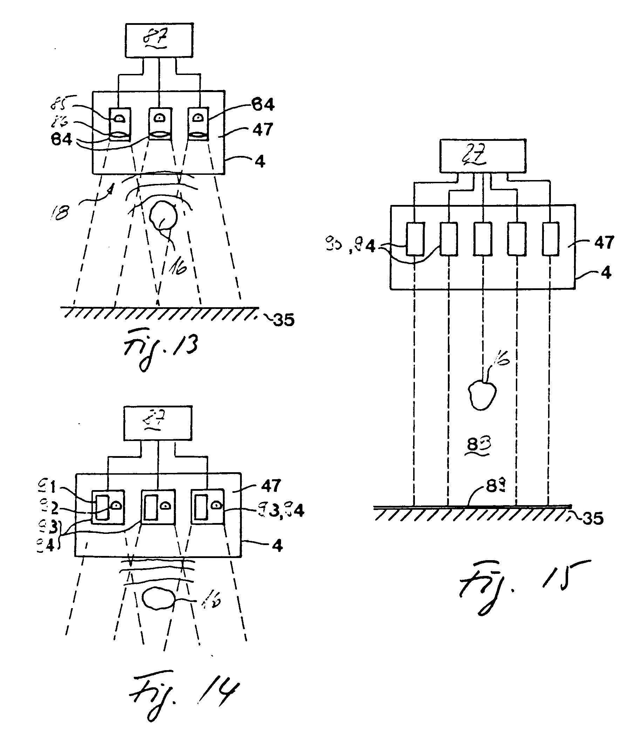

In Fig. 5 ist ein Beispiel der mechanischen Abschirmvorrichtung für den Stirnbereich des Abtragorgans 4 dargestellt. Die Textilfaserballen-Abtragmaschine 1 mit dem Abtragorgan 4 ist in Frontansicht abgebildet. An der Vorderseite des Abtragsorgans 4 ist ein Schutzschild 31 angebracht. Dieser Schutzschild 31 ist in vertikaler Richtung, wie mit dem Doppelpfeil 32 dargestellt, mittels Führungen 33 verstellbar und wird durch einen Anschlag 34 derart festgehalten, dass die Gefahrenzone 18 vollständig abgedeckt und damit den Zugang zur rotierenden Abtragwalze 7 von vorn verunmöglicht ist. Ebenso ist der Schutzschild 31 genügend breit bemessen, um einen Zugang schräg von vorne zu verunmöglichen. Wenn ein Faserballen 2 beinahe abgetragen ist, liegt der Schutzschild 31 auf dem Boden 35 auf. Wegen der Verschiebbarkeit des Schutzschildes 31 längs der Führungen 33, welche eine bestimmte Mindestkraft erfordern soll, ist die Vertikalbewegung des Abtragorgans beim weiteren Ballenabtrag nicht behindert, sodass die Faserballen vollständig abgetragen werden können. Die Unterkanten des Schutzschildes 31 sind mit Abschrägungen 38 versehen, damit er beim Drehen des Abtragorgans (um 180° bezüglich der Achse 13) auf die andere Seite, zur Bearbeitung einer auf der Gegenseite angordnete Reihe von Faserballen, hochgeschoben wird.

Die vertikale Lage des Abtragorgans, also dessen Höhe über dem Boden, ist durch die Maschinensteuerung bestimmt. Dieses Steuersignal zur Einstellung der Höhe, kann zur Steuerung des Schutzschildes herangezogen werden. Damit ist, nebst einer passiven Vertikal-Verschiebung des Schutzschildes 31, es auch möglich, den Abstand des Schutzschildes 31 vom Boden 35 mittels dieses schon vorhandenen Steuersignals in vertikaler Richtung durch eine motorische, pneumatische oder hydraulische Vorrichtung 37 zu bewegen.

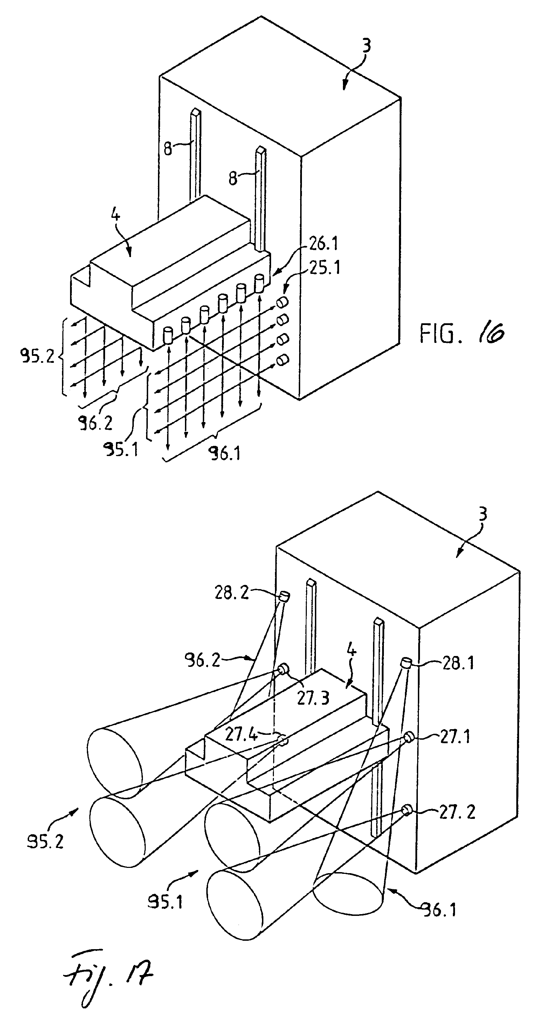

Eine andere mechanische Abschirmvorrichtung für die stirnseitige Gefahrenzone 18.3 zeigt Fig. 6. Das Abtragorgan 4 und die in einer Reihe 12 angeordneten Faserballen 2 sind im Grundriss dargestellt. Ein in Achsrichtung 42 der Abtragwalze 7 horizontal verschiebbares Schutzschild 41 ist unmittelbar unter der Abtragwalze angeordnet. Der Schutzschild 41 wird beispielsweise längs zweier Führungen 43 derart verschoben, dass ein von Faserballenoberfläche unverdeckter, stirnseitiger Freiraum 48 unter der rotierenden Abtragwalze 7 stets abgedeckt ist.

Die Verschiebung des Schutzschildes 41, der wie ein Schlitten auf der Aussenseite der Faserballen gleitet, kann wiederum passiv durch Verschiebung des Schutzschildes längs Abschrägungen 44 beispielsweise gegen einen Federdruck erfolgen, oder aktiv mittels Distanzsensoren 45 und eines motorischen, hydraulischen oder pneumatischen Antriebes 46 vorgenommen werden.

Der Schutzschild 41 kann entweder starr oder storenförmig aufrollbar ausgestaltet sein. Bei einer rollstorenförmigen Ausführung, lässt sich derselbe unter der vorderseitigen Abdeckung 47 des Abtragorgans 4 vollständig unterbringen.

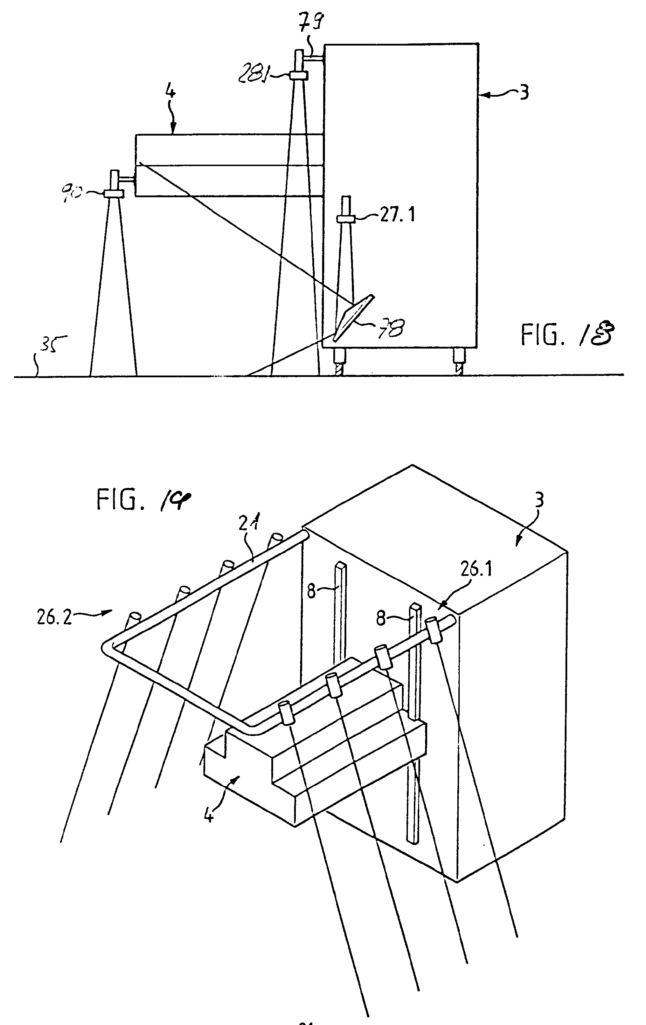

Eine weitere mechanische Abschirmvorrichtung ist in Fig. 7 dargestellt. Sie besteht aus einem mechanischen Schutzvorhang 51, der über das Abtragorgan 4 ausgebreitet ist. Er hängt vorne über das Abtragorgan 4 herunter und verdeckt den Zugang zur Gefahrenzone 18.3 der Abtragwalze 7. Wenn der mechanische Schutzvorhang 51 oben am Maschinengestell 3 befestigt ist, ist der Abstand 52 der Vorhangsunterkante 53 vom Boden aus geometrischen Gründen unabhängig von der Position des in vertikaler Richtung 9 verschiebbaren Abtragorgans 4. Während des Wechsels auf die parallele Ballenreihe wird der mechanische Schutzvorhang jeweils manuell angehoben.

Anstelle des manuellen Anhebens kann eine mechanische Lösung realisiert sein. Beispielsweise kann der mechanische Schutzvorhang 51 an einem Schwenkelement 54 befestigt sein, welches mittels einer auf der Deckfläche 55 des Abtragorgans 4 abgestützten und unter das Schwenkelement 54 greifenden, verschiebbaren Rolle 56 in Pfeilrichtung 58 angehoben werden kann. Die Rolle 56 ihrerseits wird durch eine mit ihr verbundenen gesteuerten Zylinder-Kolbeneinheit 57 bewegt.

### B. Mechanische Schutzmittel für die Seitenbereiche

Ein erstes Beispiel einer mechanischen Schutzvorrichtung für die Seitenbereiche ist in Figur 8 dargestellt. Die Ballenabtragmaschine 1 mit dem über einem Faserballen 2 positionierten Abtragorgan 4 ist von oben dargestellt. Auf beiden Seiten des Abtragorgans 4 mit den Abtragwalzen 7, 7' sind Schutzschilder 61.1, 61.2 in einem gewissen Abstand b_{S} von diesen Abtragwalzen bzw. von den seitlichen Gefahrenzonen 22.1, 22.2 fest angebracht. Diese Schutzschilder 61.1, 61.2 selber bestehen vorzugsweise aus einem flexiblen Material wie Gummi, Weichkunststoff oder sie sind lamellenförmig aufgebaut. Um einen sicheren Schutz gewährleisten zu können, ist es erforderlich, dass der Abstand b_{S} zwischen den Schutzschildern 61.1, 61.2 und den Seitenplatten 15 so gross gewählt wird, dass eine Person selbst bei ausgestrecktem Arm nicht bis in den Gefahrenbereich 18 greifen kann; er beträgt bspw. 85 cm. Dieser Abstand b_{S} ist seinerseits von der Geometrie und Grösse der Schutzschilder 61.1, 61.2 abhängig. Zu beachten ist, dass die Schilder nicht notwendigerweise als flache Platten ausgebildet sein müssen, sondern dass diese vorzugsweise dem erforderlichen Schutz- bzw. Überwachungsbereich angepasst werden und bspw. eine geeignete Biegung aufweisen. Die Schutzschilder ragen hier nur so weit gegen unten, dass sie über die zu bearbeitenden Ballen geführt werden und keine Behinderung in Transportrichtung verursachen. Vorzugsweise werden die Schilder 61 in ihren Halterungen 62 in Vertikalrichtung mittels Führungen 63 verschiebbar angeordnet. Sobald das Abtragorgan 4 über das Ende eines Ballens herausgeführt wird, wir das entsprechende Schild abgesenkt, so dass ein guter Schutz auch seitlich von unten erzielt wird. Die Bewegung der Schilder 61 über die Faserballen kann mit Führungsrollen unterstützt sein. Durch ihr Eigengewicht - oder aktiv durch einen Antrieb unterstützt - werden die Schilder 61 abgesenkt. Für das Heben oder ev. das Absenken kann ein Elektromotor oder eine hydraulische Einrichtung vorgesehen werden.

In einer modifizierten Ausführungsform können die Schilder auch in horizontaler Richtung verstellbar sein. Diesfalls sind die Schutzschilder 61 oder deren Führungen 63 bspw. an Teleskoparmen im Abstand von der Gehäusekonstruktion 6 gehalten. Dies ermöglicht es, das Abtragorgan über einen Faserballen bis an dessen Endflanke zu bewegen, auch wenn der nächste Ballen eine grössere Höhe aufweist und das entsprechende Schutzschild 61 beim Vorschub an diesem nachfolgenden Ballen ansteht. Dazu kann ein Sensor vorgesehen werden, der unter bestimmten, vorgebbaren Bedingungen die Horizontalbewegung des Schildes gegenüber der Gehäusekonstruktion 6 des Abtragorgans 4 freigibt. Als Kriterium kann z.B. ein über eine bestimmte Zeit konstant bleibender Gegendruck auf das Schild dienen. Hierzu wird ein üblicher druckabhängiger Sensor am Abtragorgan 4 bzw. dem Schutzschild 61 vorgesehen.

Ein anderes Beispiel einer mechanischen Schutzvorrichtung ist in Figur 9 dargestellt. Seitlich des Abtragorgans 4 sind Schutzschilder 61.1, 61.2 an gelenkig mit dem Abtragorgan verbundenen Auslegern 71.1, 71.2 angebracht. Die Enden dieser Ausleger 71 besitzen je mindestens eine Führungsrolle 72.1, 72.2. Wird das Abtragorgan 4 in Richtung des Pfeils F über einen ersten Ballen 2.1 bewegt, so würde der in Bewegungsrichtung liegende Ausleger 71.1 nach einer gewissen Zeit gegen die Kante eines zweiten Ballens 2.2, der hier bspw. eine höhere Flanke aufweist, anstehen. Die Führungsrolle 72.1 bewirkt aber ein mechanisches Anheben der Schutzplatte sobald sie mit einem Hindernis in Kontakt kommt, so dass das Abtragorgan 4 den ganzen Ballen bis zu seiner Flanke 77 abtragen kann. Im vorliegenden Beispiel besitzen die Schutzschilder 61 Schlitze für die entsprechenden Führungsrollen. Um ein Anstehen der Schilder gegen den nachfolgenden Ballen zu verhindern, werden die Schilder ihrerseits drehbar um eine horizontale Achse a angeordnet. Damit das Schild nicht auch durch eine Person, die im Begriffe ist, sich dem Gefahrenbereich zu nähern, verdreht wird, ist ein Sicherungsmittel vorgesehen. Dies kann wiederum ein Sensor sein, der bestimmte Bedingungen für die Freigabe des Schildes registriert (bspw. Infrarotsensor) oder die Freigabe des Schildes wird mittels dem bekannten Ballenprofil gesteuert. Selbstverständlich ist es auch möglich, die Schilder gegenüber den Führungsrollen zurückzuversetzen, um bei schwierigen Profilen ein Anstehen der Schilder zu verhindern. Sobald sich ein Schild wieder über einem Ballen befindet, wird es mittels einem Antrieb oder durch Federkraft wieder in seine ursprüngliche Position gebracht.

Zur Verhinderung eines Abfallens der Schutzplatten 61 in den Ballenzwischenräumen 75 ist eine zusätzliche Massnahme vorgesehen. Diese kann in einer sensorisch überwachten Anhebe-/Absenkeinrichtung 74.1, 74.2, bspw. einem Drahtzug, bestehen. Gleichzeitig bietet diese Anhebvorrichtung die Möglichkeit, die Schutzplatten beim Anheben zu unterstützen bzw. auch bei schwierigen Ballenprofilen ein Anstehen und Verklemmen der Ausleger 71 bzw. der Platten 61 zu verhindern. In einer bevorzugten Ausführungsform wird das Schwenken der in Vorschubrichtung liegenden Platte (zur Verhinderung des Anstehens am folgenden Ballen) mit der Anhebeinrichtung gekoppelt, so dass bei einem Anheben das Schild automatisch in die erforderliche Lage geschwenkt wird.

Figur 10 zeigt ein ähnliches Prinzip wie bei der Ausführungsform gemäss Figur 4. Die Schutzschilder 61.1, 61.2 werden hier jedoch nicht aufgrund der Feststellung einer höheren Flanke des folgenden Ballens, sondern durch Führen der Schilder entlang dem Ballenprofil angehoben und abgesenkt. Die Schutzschilder sind am Ende der Ausleger 71.1, 71.2 befestigt. Die Führungsrollen 72.1, 72.2 sind an der Unterkante der Schutzschilder gelagert. Wenn ein Schild 61 über eine Ballenflanke geführt wird und somit leicht absinkt, kann dies als Signal zur Detektion der Ballenflanke (Feststellung des Ballenprofils) verwendet werden. Sofern ein grösserer Zwischenraum 75 zwischen zwei Ballen 2.1, 2.2 besteht, verhindert eine motorisch betriebene Anhebe-/Absenkeinrichtung 72.1, 72.2 ein zu grosses Absenken der Schutzschilder. Da das Ballenprofil spätestens nach einem ersten Durchgang des Abtragvorgangs in eine Richtung bekannt ist, werden die Schutzschilder jeweils am Ende der Ballenstrecke nicht angehoben, so dass dort ein optimaler Schutz des Gefahrenbereichs gegen unten erreicht wird. Selbstverständlich ist es möglich in den Ausführungsvarianten nach Figur 9 oder 10 das Anheben und Senken der Schutzschilder bei bekanntem Ballenprofil entsprechend zu steuern. Bei beiden Varianten erfolgt das Absenken der Schutzschilder 61 durch deren Eigengewicht bzw. durch das Gewicht derer Aufhängungen oder wird durch Federmittel zusätzlich unterstützt. Ausserdem können die Führungsrollen bei beiden Ausführungen bei Bedarf angetrieben sein, damit allfällige Druckkräfte auf die Faserballen reduziert werden.

Die besprochenen Schutzvorrichtungen zeichnen sich dadurch aus, dass sie den Gefahrenbereich seitlich bzw. seitlich von unten abdecken. Ein besonderer Vorteil der Vorrichtungen gemäss Figur 8 bis 10 liegt darin, dass diese Sicherheitsmittel eine genügende Sicherheitsdistanz (bspw. Armlänge) vom Gefahrenbereich einhalten, und nicht nur das Annähern einer Person, sondern auch ein schnelles Eindringen von Gliedmassen in den Gefahrenbereich verhindern.

Beim Betrieb einer Ballenabtragmaschine mit solchen mechanischen Schutzmitteln kann wie folgt vorgegangen werden. Um zu verhindern, dass die mechanischen Einrichtungen beim Vorschub der Maschine an Ballen anstehen, können diese entweder mit mechanischen Führungsmitteln, vorzugsweise Führungsrollen, dem Profil entlang geführt werden. Dabei wird das bekannte Ballenprofil zur Führung der mechanischen Schutzeinrichtungen verwendet. Es wird ein in herkömmlicher Weise ermitteltes, das Ballenprofil repräsentierende Signal zur Steuerung der Bewegung der mechanischen Schutzmittel verwendet. Der entsprechende Betrieb kann jeweils soweit erforderlich mit Antriebsmitteln unterstützt werden.

### C. Mechanische Schutzmittel für Stirn- und Seitenbereiche

Schliesslich können mechanische Schutzmittel ganzheitlichen Überwachung des Gefahrenbereichs 18 verwendet werden. Eine entsprechende Ausführungsform zeigt Figur 11. Am Abtragorgan 4 unterhalb der Abtragwalzen 7, 7' ist ein absenkbarer Rost 81 angebracht. Unter dem Gegendruck der abzutragenden Faserballen oder sensorisch gesteuert wird der Rost 81 in die eingezeichnete Arbeitsposition 82 angehoben und gibt damit die Reissnocken der Abtragwalzen frei. Befindet sich das Abtragorgan 4 nicht im Kontakt mit einem Faserballen so fällt der Rost wegen seines Eigengewichts oder unterstützt durch eine Federkraft in die untere Position 83 und deckt somit die gefährdete Zone 18 ab. Selbstverständlich ist es möglich, den Rost ebenfalls durch eine Anheb-/Absenkeinrichtung aktiv zu unterstützen. Um auch bei grösseren Profilsprüngen zwischen zwei Ballen eine Anpassung der Roststellung zu gewährleisten, können ebenfalls Führungsrollen am Rost vorgesehen werden, die bspw. an dessen Seitenkanten in Vorschubrichtung dem Profil der Ballen entlanglaufen. Um zu gewährleisten, dass der Rost seine Schutzfunktion auch ausübt, wenn das Abtragorgan einen Ballen seitlich nur teilweise überragt, kann in einer bevorzugten Ausführungsform ein mehrteiliger Rost vorgesehen werden. Bei beispielsweise zwei Abtragwalzen 7, 7' ist der Rost derart zweigeteilt, dass sich ein Rostteil absenken kann sobald die eine Walze über eine Ballenkante hinüberläuft. Dazu ist der Rost bspw. entlang der Linie x in Figur 11 geteilt.

In Fig. 12 ist ein Beispiel einer mechanischen Abschirmvorrichtung mit einer Folien bzw. lammellenartigen Abdeckung dargestellt. Das Abtragorgan 4 ist wiederum in Frontansicht abgebildet. Seitlich der Abtragwalzen 7, 7' sind Umlenkführungen oder Umlenkrollen 69 angebracht, die es erlauben, eine lamellenartige oder flexible Abdeckung 68 unter den Abtragswalzen 7, 7' durchzuziehen. Auf diese Weise kann erreicht werden, dass die rotierenden Abtragwalzen stets verdeckt sind, wenn sie nicht mit den Faserballen in Berührung stehen. Zur Bewegung der Abdeckung dient ein motorischer Antrieb 64 der über einen nicht dargestellten Motor Rollen 65 für das Aufwickeln der Abdeckung 68 antreibt. Diese Abdeckung weist mindestens eine Ausnehmung auf, die so positioniert werden kann, dass die Walzen 7, 7' während dem Betrieb frei gegen die Ballen greifen können. Um gegen einen allfälligen Druck von unten den Widerstand der Abdeckung zu erhöhen, können ein oder mehrere Widerlager 67 für die Abdeckung 68 vorgesehen werden.

Die Abdeckung 68 kann auch aus einem einzigen Stück bestehen, das bei Bedarf über die Öffnung für die Abtragwalzen 7, 7' gezogen wird. Sofern die Abdeckung eine Ausnehmung aufweist, kann sie bspw. zweiteilig mit einem mittigen Arbeitsschlitz 65 gestaltet sein, wobei die Teile dann mit Bändern verbunden sein können, die an den Stirnseiten der Walzen vorbeilaufen. Bei sensorisch erkannter Gefahr wird die Abdeckung über den Gefahrenbereich 18 gezogen, resp. die zweiteilige Abdeckung derart verschoben, dass die Abtragwalzen nicht mehr durch den Arbeitsschlitz 66 zugänglich sind.

Den mechanischen Schutzmitteln ist das Merkmal gemeinsam, dass sie entweder so angeordnet sind, dass sie die Bearbeitung der Ballen von vornherein nicht beeinträchtigen können oder dass sie bewegbar angeordnet sind, um in Arbeitsstellung des Abtragorgans über einem Ballen keine Behinderung zu verursachen. Ihre Bewegung kann durch die Schwerkraft und entsprechende, entlang dem Ballenprofil laufende Führungsmittel, vorzugsweise Führungsrollen 72 bewirkt werden oder es erfolgt eine motorische, hydraulische oder pneumatische Unterstützung ihrer Bewegungen. In einer bevorzugten Ausführungsform wird die Bewegung der mechanischen Schutzmittel in Abhängigkeit des bei vielen Ballenabtragmaschinen bekannten Verlaufs des Ballenprofils gesteuert. Dazu wird dem entsprechenden Antrieb der mechanischen Schutzmittel ein das Ballenprofil repräsentierendes Signal zugeführt. In entsprechender Weise kann dieses Signal auch durch speziell vorgesehene Distanzsensoren am Abtragorgan ermittelt werden, sofern das Signal nicht anderweitig bereits zur Verfügung steht.

Ihre Wirkung äussern die mechanischen Schutzmittel, in erster Linie sobald das Abtragorgan 4 mit seinem Gefahrenbereich in eine frei Position zu liegen kommt. Selbst in der Arbeitsstellung befinden sich aber die mechanischen Schutzmittel in einer solchen Stellung, dass ein seitlicher Eingriff in den Gefahrenbereich nicht möglich ist. Dazu wird vorgesehen, dass die Schutzmittel, bspw. die Schutzschilder 61 möglichst dicht über den Ballen 2 geführt werden. Damit wird ein praktisch lückenloser Übergang zwischen den zu bearbeitenden Ballen und dem Abtragorgan geschaffen, was die Sicherheit optimal gewährleistet. Die vorgesehenen Führungsrollen oder Anheb-/Absenkeinrichtungen 74 bewirken ausserdem ein gutes Folgen der Schutzmittel entlang dem Ballenprofil.

### 2. Sensorische Schutzmittel (ohne zusätzliche mechanische Schutzmittel)

Als Sensoren können z.B. Taster, Einwegsysteme oder Distanzmessgeräte auf optischer-, Radar-, Ultraschall- oder Infrarot-Basis Verwendung finden. Darauf wird im folgenden Beschreibungsteil jeweils nicht immer explizit hingewiesen. Vorzugsweise werden jedoch Sensoren eingesetzt, welche die Ballen nicht detektieren (z.B. Infrarotsensoren) so dass das Eindringen einer Person in den Überwachungsbereich direkt festgestellt werden kann. Ausserdem muss beachtet werden, dass Ausführungen zu sensorischen Schutzmitteln für den Stirnbereich analog auf sensorische Schutzmittel für den Seitenbereich bezogen werden können und umgekehrt.

### A. Sensorische Schutzmittel für den Stirnbereich

In Fig. 13 ist ein Ausführungsbeispiel mit sensorischer Überwachung der Gefahrenzone 18 mittels Infrarotsensoren dargestellt. Die auf Körperwärmestrahlung empfindlichen passiven Detektorvorrichtungen 84, die aus Infrarotsensoren 85 und geeigneten Optiken 86 bestehen, sind an der vorderseitigen Abdekung 47 derart angebracht, dass sie eine Annäherung von Gliedmassen registrieren können. Diese passiven Detektorvorrichtungen 84 werden mittels eines Steuergerätes 87 derart beschaltet, dass sie Änderungen des Wärmebildes detektieren können. Damit sind sie in der Lage, das Annähern oder Eindringen von Händen in die Gefahrenzone 18 festzustellen. Durch laufenden Vergleich der Signale mehrerer Infrarotsensoren 85 kann die Unterscheidung der Signale des gefährdeten Gegenstandes 16 von denjenigen der Umgebung, wie etwa des Bodens 35, zusätzlich verbessert werden.

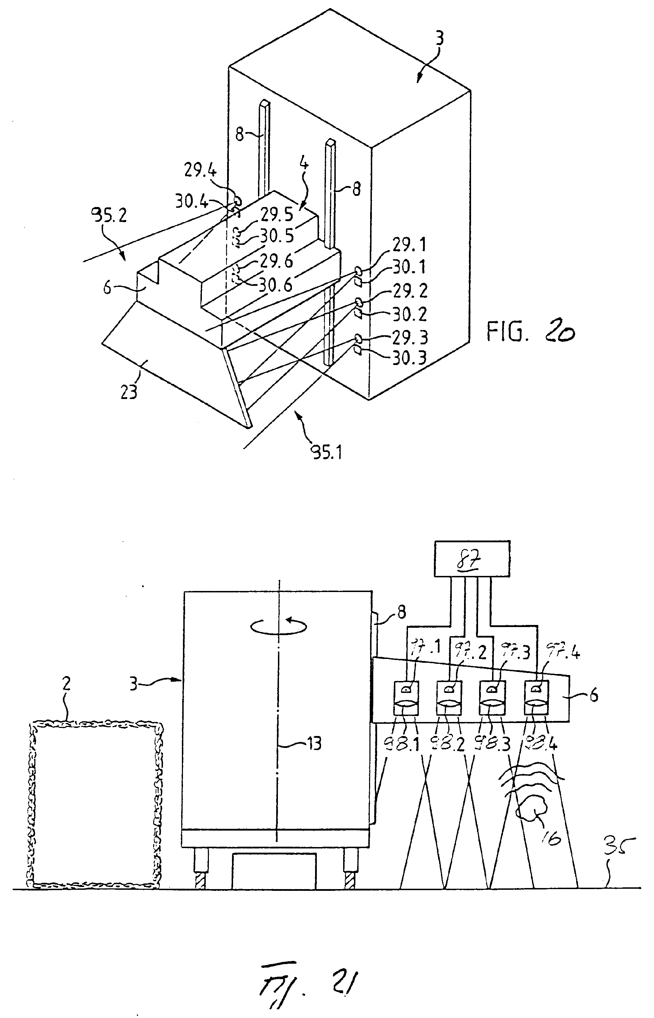

Ein weiteres Ausführungsbeispiel einer sensorischen Überwachung ist anhand von Figur 14 näher erläutert. Eine Überwachung der Gefahrenzone kann auch mittels aktiver Detektorvorrichtungen 93, beispielsweise optischen Distanzmessvorrichtungen 94, die aus einem Sender 91, etwa einer Leuchtdiode oder einem Laser, und einem Empfänger 92 bestehen, aufgebaut werden. Der Empfänger detektiert das vom Sender ausgesandte Signal nach dessen Wechselwirkung mit dem gefährdeten Gegenstand 16. Vorzugsweise werden mehrere aktive Detektorvorrichtungen 93 verwendet. Durch laufenden Vergleich ihrer Messungen in einer Auswertvorrichtung 87 kann das Reflexionssignal des Bodens 35, das bei allen Empfängern ohnehin vorhanden ist, vom zusätzlichen, durch einen Gegenstand 16 hervorgerufenen Signal, das bei einer, oder wenigen Detektorvorrichtungen 93 anfällt, unterschieden werden.

Nebst einer optischen Überwachung der Gefahrenzone ist auch die Verwendung von akustischen Distanzmessvorrichtungen 84 in Betracht zu ziehen. Beispielsweise lässt sich die Distanzmessung aus der Zeitverzögerung zwischen eines ausgesandten Ultraschallpulses und dem Eintreffen dessen Echos bestimmen.

Vorzugsweise wird mittels den Sensoren, wie Fig. 15 zeigt, ein sog. (sensorischer) Schutzvorhang realisiert. In dem dargestellten Ausführungsbeispiel wird z.B. zwischen dem Abtragorgan 4 und bspw. dem Boden 35 mittels einer Mehrzahl von Detektorvorrichtungen 90 ein optischer oder akustischer Vorhang 88 gelegt wird. Befindet sich ein Gegenstand 16 im Bereich des Vorhanges, so wird dies durch Detektorvorrichtungen festgestellt. Entweder wird die Unterbrechung des Strahls festgestellt (Lichtschrankenprinzip) oder bei Passivsensoren wird das Objekt direkt detektiert. Aktive Detektorvorrichtungen können bspw. als Distanzmessvorrichtungen 94 ausgelegt sein. Die Funktionsweise und Anordnung des Vorhangs wird nachfolgend im Zusammenhang mit sensorischen Schutzmitteln für die Seitenbereiche näher erläutert werden.

Im Falle eines optischen Vorhanges 88 kann auf dem Boden eine Reflektorvorrichtung 89, beispielsweise in Form eines Reflexionsstreifens, angebracht sein, die das Signal mindestens eines gegen die Reflektorvorrichtung 89 gerichteten Senders 91, vorzugsweise einer lichtemittierende Diode oder eines Lasers, auf mindestens einen Empfänger 92 zurückwirft, der sich beim Sender 91 befindet. Gegebenenfalls ist der Empfänger 92 mit einer Optik versehen.

Eine weitere Möglichkeit besteht darin, dass sich die Empfänger nicht bei den Sendern 91 befindet, sondern dass die Empfänger 92 anstelle der Reflektorvorrichtung 89 in einer Reihe auf dem Boden 35 befestigt oder in denselben eingelassen sind.

Die Verwendung von gegenüberliegenden optischen Sendern 91 und optischen Empfängern 92 ist technisch einfacher, erfordert aber, dass längs der Faserballenreihe 12 eine grosse Anzahl Empfängerelemente in den Boden eingelassen sind und dass während der Fahrt des Maschinengestelles 3 längs der Schiene 11 immer bestimmt sein muss, welcher Empfänger 92 in Funktion ist. Die Realisierung der Methode mit der Lichtreflektorvorrichtung 89 verlangt lediglich die Befestigung eines gut reflektierenden Streifens.

In Analogie zum optischen Vorhang kann ein akustischer Vorhang 88 mittels akustischer aktiver Detektorvorrichtungen 93, bestehend aus Ultraschallsendern 91 und Ultraschallempfängern 92 realisiert werden, wobei letztere im Boden eingelassen sind. Es besteht auch die Möglichkeit das Ultraschallsignal nach einer Reflexion am Boden zu empfangen. Der Gegenstand, der in den Bereich des akustischen Vorhanges 88 gelangt und damit Gefahr läuft in die Gefahrenzone 18 einzudringen, wird wiederum durch eine Änderung das Signales am Empfänger 92 registriert.

Alle diese sensorischen Mittel dienen der Auslösung von Schutzmassnahmen, bspw. einem aktiven Abschalten der Abtragwalze. Grundsätzlich können sensorische Schutzmittel alleine als Schutzmassnahme angewendet werden. In jedem Fall ist es wichtig, dass der Sensor als Aktivschalter ausgelegt ist, das heisst, bei Sensor AUS (bspw. Fehler in der Elektronik) ist die Abtragwalze auch auf AUS.

### B. Sensorische Schutzmittel für die Seitenbereiche

Figur 16 verdeutlicht die Anordnung der Sensoren bzw. des Vorhangs an zwei grundsätzlichen Anordnungsprinzipien. Auf der einen Seite des Abtragorgans sind je ein erster vertikaler und horizontaler Sensor-Array 25.1, 26.1 und auf der anderen Seite entsprechende zweite (hier nicht sichtbare) Sensor-Arrays angeordnet. Diese bilden je einen vertikal orientierten Schutzvorhang 96.1, 96.2 bzw. horizontal orientierte Schutzvorhänge 35.1, 35.2. Solche vertikal bzw. horizontal orientierten Schutzvorhänge können wie in diesem Beispiel gemäss Figur 16 kombiniert oder alleine verwendet werden. Die Begriffe "horizontal" und "vertikal" beziehen sich dabei nicht auf die Lage des Schutzvorhangs, sondern auf die Ausrichtung der Sensoren, bzw. der Ausrichtung der Achsen ,deren Erfassungskegel. Wie aus der Figur 16 ersichtlich ist, verlaufen in diesem Ausführungsbeispiel sowohl die horizontal orientierten Vorhänge 95.1, 95.2 sowie die vertikal orientierten Vorhänge 96.1, 96.2 mindestens annähernd parallel zu einer vertikalen Ebene und parallel zum Abtragorgan. Der Vorhang wird aus den Erfassungskegeln mehrerer Sensoren gebildet. Es muss darauf geachtet werden, dass die sich zwischen den Kegeln ergebenen Zwischenräume kleiner sind als die minimale Ausdehnung der zu detektierenden Objekte. Die Erfindung dient in erster Linie dem Personenschutz. In diesem Beispiel ist der Vorhang so ausgelegt, dass die Hand bzw. der Arm, der in die Gefahrenzone greifenden Personen detektiert werden soll. Die Zwischenräume dürfen demzufolge eine maximale Grösse von ca. 10 cm (Armdurchmesser) haben. Die "Lückenlosigkeit" des Schutzes ist dadurch nicht beeinträchtigt. Es ist auch möglich, den Vorhang so auszulegen, dass er die ganze Person detektieren muss. In diesem Fall dürften die Zwischenräume sogar bis zu bspw. 50 cm gross sein. Allerdings muss dann das Verhältnis zwischen Gefahrenbereich und Überwachungsbereich vergrössert werden. Die Sensorik erfasst dann bspw. Objekte bereits in einem Abstand von 1 bis 2 m vom Gefahrenbereich.

Es versteht sich von selbst, dass bei einer Neigung des Abtragorgans, d.h. wenn der Abtragvorgang in einer gegenüber der Horizontalen geneigten Ebene erfolgt, in der Regel auch eine entsprechende Anpassung, z.B. eine Neigung der Schutzvorhänge erfolgt. Vorzugsweise sind die Schutzvorhänge 96.1, 96.2 aber auch dann senkrecht bzw. parallel zur Abtragebene (Ebene in der die Abtragwalzen die Ballen bearbeiten) ausgerichtet.

Eine bevorzugte Anordnung eines Sensorsystems mit Ultraschallsensoren ist in Figur 17 näher dargestellt. Vier untere, am Maschinengestell und seitlich des Abtragorgans angebrachte Ultraschallsender-/empfänger 27.1-27.4 bilden zwei horizontal orientierte Schutzvorhänge 95.1, 95.2. Als Ultraschallsender-/empfänger können herkömmliche Ultraschallwandler eingesetzt werden, die bei Detektion eines Gegenstandes bzw. Änderung des Ultraschallsignals ein entsprechendes elektrisches Ausgangssignal liefern, dass in einer Steuerungseinrichtung ausgewertet werden kann. Zwei vertikal orientierte Schutzvorhänge 96.1, 96.2 werden durch zwei weitere, ebenfalls am Maschinengestell 3 angebrachte Ultraschallsensoren 28.1, 28.2 gebildet. Wie in Figur 17 angedeutet, besitzen die Ultraschallsender eine gewisse Streuung. Das seitliche Überwachungsgebiet entspricht hier dem durch die räumliche Ausdehnung der Erfassungskegel abgeschlossenen Gebiet. Benutzt man Ultraschallsensoren, bei denen für den Sender und den Empfänger derselbe Wandler verwendet wird, so befindet sich im Nahbereich bekanntlich eine sogenannte Totzone, in der Gegenstände nicht detektiert werden können. Diese Tatsache muss insbesondere bei den unteren Sensoren 27.1-27.4 berücksichtigt werden. Die beiden über dem Abtragorgan angeordneten Sensoren 28.1, 28.2 erfassen mit dem vertikal orientierten Vorhang diese Totzone der unteren Sensoren 27.1-27.4, so dass je drei Sensoren zusammen die seitlich des Abtragorgans liegenden Überwachungsbereiche im Sinne der Erfindung lückenlos erfassen. Es versteht sich, dass die oberen Sensoren 28.1, 28.2 um eine ihrer Totzone entsprechende Distanz über dem Abtragorgan bzw. dessen oberster Position angeordnet werden.

Je nach konkreten Abmessungen und Konstruktion der Ballenabtragmaschine müssen die Sensoren bei Bedarf verschieden angeordnet sein. Die Anordnung der Sensorik bestimmt sich des weiteren wesentlich nach der Art und Charakteristik der Sensoren sowie deren Anzahl. Insbesondere ist es möglich, die Sensoren nicht direkt am Maschinengestell 3 bzw. dem Abtragorgan 4 anzuordnen, sondern entsprechend Figur 18 an Auslegern 79, die am Maschinengestell angebracht sind. Bei geeigneter Charakteristik können sowohl ein vertikal, als auch ein horizontal orientierter Vorhang je durch einen einzelnen Sensor gebildet sein.

In Figur 18 ist eine solche Anordnungsmöglichkeit näher dargestellt. Ein erster Ultraschallsensor 27.1 ist am Maschinengestell derart angebracht, dass sein Erfassungskegel senkrecht gegen unten (bzw. senkrecht gegen die Abtragebene) ausgerichtet ist. Im Abstand vom Sensor 27.1 ist ein Reflektor 78 im Bereich seines Erfassungskegels angebracht. Dieser Reflektor ist so ausgelegt, dass der Strahl in zwei Strahlrichtungen aufgespaltet wird. Dies wird erreicht, indem der Reflektor 78 eine Prismenform aufweist. Eine breite Streuung des Kegels kann erreicht werden, wenn der Reflektor bspw. eine konvexe Form aufweist. Es ist auch möglich, den Reflektor 78 in der einen Achse konvex auszubilden, um den Strahl in dieser Ebene möglichst auszudehnen, und in einer senkrecht dazu stehenden Achse konkav auszubilden, um den Strahl in der entsprechenden Ebene zu bündeln (Sattelform der Oberfläche). Dadurch kann bspw. ein in seitlicher Richtung schmaler und vertikal gestreuter Schutzvorhang erreicht werden. Der Reflektor 78 selber ist noch in der Totzone des Tastbereichs angeordnet, so dass allfällige Verschmutzungen der Reflektoroberfläche nicht als Störungen erfasst werden. Der Vorteil dieser Anordnung liegt zudem darin, dass eine Totzone, wie sie bei der Ausführung gemäss Fig. 18 auftritt, vermieden wird. Ein zweiter Ultraschallsensor 28.1 ist an einem Träger 79 am Maschinengestell 3 angebracht. Dieser zweite Ultraschallsensor 28.1 ist ebenfalls vertikal ausgerichtet und erfasst den Raum im Nahbereich des Maschinengestells 3, wo der Erfassungskegel des ersten Sensors 27.1 allenfalls noch ungenügend gestreut ist. Die Sensoren sind bei diesem Ausführungsbeispiel gut geschützt und der Strahl kann in einfacher Weise ausgerichtet und in seiner räumlichen Ausdehnung beeinflusst werden. In diesem Ausführungsbeispiel ist stirnseitig ein zusätzlicher Schutzvorhang durch mehrere Sensoren 90 vorgesehen. Damit wird ein geschlossenes Überwachungsgebiet für das Abtragorgan 4 realisiert.

Um mit einem vertikal orientierten Schutzvorhang ein gewünschtes, seitliches Überwachungsgebiet abgrenzen zu können, wird im Ausführungsbeispiel gemäss Figur 19 ein in einer horizontaler Ebene liegender, im oberen Bereich des Maschinengestells 3 fest montierter Haltebügel 21 vorgesehen. Es muss beachtet werden, dass auch wenn in dieser Schrift von "vertikal" oder "horizontal" orientiertem Vorhang die Sprache ist, die Sensoren nicht in geometrischem Sinne vertikal oder horizontal ausgerichtet sein müssen. Für bestimmte Anwendungen werden die Sensoren ausserdem gezielt schräg angeordnet, d.h. der Schutzvorhang verläuft nicht exakt parallel zum Abtragorgan 4, sondern bildet mit diesem einen Winkel. In Figur 19 sind am Haltebügel zwei Sensor-Arrays 26.1, 26.2 auf jeder Seite des Abtragorgans 4 angeordnet und leicht schräg gegen aussen ausgerichtet. Jeder Sensor-Array besteht hier aus mehreren Ultraschall-Sendern/Empfängern oder aus Passivinfrarot-Sensoren. Der Übersichtlichkeit halber sind nur die Achsen deren Erfassungskegel angedeutet. Der resultierende Schutzvorhang hat im Bodenbereich die maximale Entfernung vom Gefahrenbereich.

Figur 20 zeigt ein weiteres Ausführungsbeispiel der Erfindung mit zwei horizontal orientierten, optischen Vorhängen 95.1, 95.2. Mehrere aktive Detektorvorrichtungen sind seitlich des Abtragorgans 4 am Maschinengestell 3 angeordnet. Das Abtragorgan ist vertikal entlang der Führungsschienen 8 bewegbar. Je nach möglicher Höhe des Ballenprofils bzw. nach gewünschtem Einstellbereich des Abtragorgans in vertikaler Richtung sind die Detektorvorrichtungen nicht auf den eingezeichneten Bereich beschränkt, sondern erstrecken sich über einen grossen Teil oder über die gesamte Länge der Führungsschienen 8. Die Detektorvorrichtungen sind hier bspw. Reflektionslichtschranken, die je aus einem Sender 29.1-29.6, etwa einer Leuchtdiode oder einem Laser, sowie entsprechenden Empfänger 30.1-30.6 bestehen. An der Stirnseite des Abtragorgans ist hier eine mechanische Schutzplatte 23 vorgesehen. Diese Schutzplatte ist breiter als die Gehäusekonstruktion 6 und dringt mindestens teilweise in die Lichtbereiche der Sender. Durch laufenden Vergleich der Messungen in den Detektorvorrichtungen kann das an der Schutzplatte 23 bewirkte Reflexionssignal, das bei den Empfängern vorhanden ist, von einem durch einen Gegenstand beim Eindringen in den Schutzvorhang hervorgerufenen Signal unterschieden werden.

Eine bevorzugte Variante der Erfindung sieht Sensoreinrichtungen vor, die nur ein *Empfänger*system besitzen, bspw. Bildverarbeitungssysteme (CCD-Array oder passive Infrarotsensoren, etc.). In Figur 21 ist ein Ausführungsbeispiel mit seitlich des Abtragorgans angeordneten Infrarotsensoren dargestellt. Diese bilden einen vertikal orientierten Schutzvorhang. Die auf Körperwärmestrahlung empfindlichen Infrarotsensoren 97.1-97.4 mit zugehöriger Optik 38.4-98.4 sind seitlich an der Gehäusekonstruktion 6 angebracht. Diese Infrarotsensoren werden in einer bevorzugten Ausführungsform mittels eines Steuergerätes 87 derart beschaltet, so dass sie Änderungen des Wärmebildes detektieren können. Damit sind sie in der Lage, das Annähern oder Eindringen von Händen und anderen wärmestrahlenden Gegenständen 16 in die Gefahrenzone bzw. den Überwachungsbereich festzustellen.

Ein wesentlicher Vorteil der erfindungsgemässen Sensorsysteme besteht darin, dass die Sensorik und die Steuereinheit als Modul auch mit herkömmlichen Ballenabtragmaschinen kombinierbar ist. Für bestimmte Anwendungen kann es erforderlich sein, die Sensoren höhenverstellbar anzuordnen. Insbesondere wenn das Abtragorgan über eine grossen Höhenverstellbereich verfügt, kann dadurch erreicht werden, dass die Sensorik nicht über diesen ganzen Bereich angeordnet werden muss, sondern dass die Überwachungsbereiche bzw. die Schutzvorhänge dem Abtragorgan folgen. Die Sensoren können entweder direkt am Abtragorgan montiert sein oder bspw. an höhenverstellbaren Halteorganen, die analog zum Abtragorgan entlang von Führungsschienen am Maschinengestell bewegt werden können.

Als Schutzmassnahmen kommen eine Notabschaltung der Abtragwalzen (mechanische oder elektrische Bremse), das Betätigen von mechanischen Schutzmitteln (Abdeckungen, Einziehen der Walze in ein Gehäuse), Warnsignal, etc. in Frage. Zu Beachten ist, dass Schutzmassnahmen nur ausgelöst werden sollen, wenn tatsächlich ein Objekt in das Überwachungsgebiet eindringt. Falls Sensoren eingesetzt werden, die Ballen nicht detektieren (insbesondere Infrarotsensoren) kann das Eindringen einer Person in den Überwachungsbereich direkt festgestellt werden.

In den seitlichen Überwachungsbereichen dringen notwendigerweise während dem Betrieb auch Textilballen ein. Da die Textilballen, je nach eingesetzten Sensoren unter Umständen ebenfalls detektiert werden, muss dies bei der Auslösung von Schutzmassnahmen berücksichtigt werden. Es sollen keine Schutzmassnahme ausgelöst werden, wenn die Sensoren ein durch Ballen ausgelöstes Signal erhalten, d.h. das Schutzsystem soll sich gegenüber den Ballen neutral verhalten. Dies kann erreicht werden, indem das vorbekannte Ballenprofil bei der Auslösung von Schutzmassnahmen berücksichtigt wird. Die Textilballen werden auf diese Weise in das erfindungsgemässe Schutzkonzept miteinbezogen. Solange sich das Abtragorgan über den Textilballen befindet, besteht keine Gefahr, dass eine Person von der Seite oder von unten her in den Gefahrenbereich 18 eindringt. Die Ballen bilden diesfalls im Sinne der Erfindung Elemente der geschlossenen Umhüllung des Gefahrenbereichs.

### 3. Kombination von mechanischen und sensorischen Schutzmitteln

Die Erfindung bietet neben der Möglichkeit, mechanische und sensorische Schutzmittel für sich allein einzusetzen, auch den Vorteil, dass diese in Kombination verwendet werden können. Einerseits kann dadurch eine sicherheitstechnische Redundanz erreicht werden. Andererseits besteht die Möglichkeit, die Sensorik gleichzeitig zur Steuerung der mechanischen Schutzmittel einzusetzen. Dies geschieht indem die bereits erwähnte Betätigung von Schutzplatten, etc. durch die Sensorik ausgelöst wird.

Daneben bietet deren Kombination auch wegen der möglichen Überwachung des mechanischen (passiven) Sicherheitsteils durch den sensorischen (aktiven) Sicherheitsteil Vorteile. Es ist durchaus denkbar, dass der mechanisch passive Sicherheitsteil einen unerlaubten Zustand annimmt, der vom Sensor detekiert und zumindest zu einem Abschalten und Stoppen der Abtragwalze führt.

Eine gute Kombination entsteht, wenn die mechanischen Schutzmittel im Nahbereich der Abtragwalzen vorgesehen werden und die sensorischen Schutzmittel das übrige Überwachungsgebiet abdecken, insbesondere Bereiche dicht über dem Boden. Die Erfindung erlaubt eine räumlich und zeitlich lückenlose Überwachung des Gefahrenbereichs.

### 4. Selbstüberwachung

Um die Zuverlässigkeit der erfindungsgemässen Sensoreinrichtung noch weiter erhöhen zu können, wird vorzugsweise ein Selbstüberwachungssystem vorgesehen. Entweder werden Referenzobjekte oder -sender in den Messraum der Sensoren eingebracht und/oder der Sender eines Sensors wird als Referenzsignal für den Empfänger eines anderen Sensors verwendet.

Bei einer Infrarot-Sensorik wird bspw. eine definierte Referenz-Heizquelle an einer unzugänglichen Stelle der Abtragmaschine oder am Boden vorgesehen. Eine weitere Möglichkeit besteht darin, in bestimmten Testintervallen eine Referenz-Heizquelle zu zünden. Diesfalls kann diese auch im Überwachungsbereich, bspw. unmittelbar vor dem Sensor angeordnet sein. Dadurch wird die Bewegung eines warmen Objektes simuliert, so dass auch die Ansprechzeit der Sensorik überwacht werden kann. Für andere Sensoren können in entsprechender Weise adäquate Referenz-Objekte bzw. -sender in Intervallen aktiviert werden.

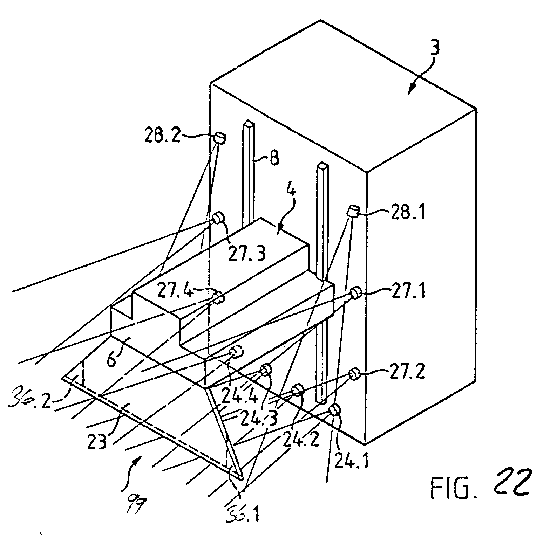

Im Beispiel gemäss Figur 22 ist eine Ultraschallsensorik eingesetzt, wie sie anhand von Figur 17 beschrieben wurde. Zusätzlich ist in diesem Ausführungsbeispiel im Stirnbereich eine Schutzplatte 23 vorhanden. Zwischen den beiden seitlichen Schutzvorhängen liegt ein parallel zur Abtragebene liegender Schutzvorhang 99. Der Schutzvorhang wird durch mehrere in einer horizontalen Linie am Maschinengestell 3 angeordnete Sensoren 24.1-24.4 aufgespannt. Dieser Schutzvorhang 99 schliesst zusammen mit den seitlichen Schutzvorhängen sowie der stirnseitigen Schutzplatte 23 das Überwachungsgebiet. Derart kann auch von vorne nicht unbemerkt unter der Schutzplatte hindurch in den Gefahrenbereich unter den Abtragwalzen eingedrungen werden.

Die Anordnung der Elemente für das Selbstüberwachungssystem sollen anhand dieses Ausführungsbeispiels für zwei Möglichkeiten näher erläutert werden. Es ist möglich, das Ultraschallsignal der beiden oberen Ultraschallsender/-empfänger 28.1, 28.2 als Referenzsignal für die unteren Ultraschallsender/-empfänger einzusetzen und umgekehrt. Dabei werden die Sender/Empfänger so gesteuert, dass sich Arbeits- und Testzyklen der oberen und unteren Sender abwechseln. Solange die entsprechenden Signale gegenseitig empfangen werden, ist dadurch die Funktionsbereitschaft der Sensorik nachgewiesen. Durch eine entsprechende Selbstüberwachungseinheit kann dies überwacht werden. Sobald ein Signal nicht mehr empfangen werden sollte, können besondere Massnahmen eingeleitet werden, bspw. ein Abschalten der Maschine, Warnsignal etc. Eine weitere Möglichkeit besteht darin, an der Schutzplatte 23 an deren seitlichen Kante zwei Referenz-Objekte 36.1,36.2 mit guter Ultraschall-Reflektion anzubringen. Unter Umständen kann die Schutzplatte, die in den seitlichen Überwachungsbereich reicht, selber als Referenzobjekt dienen. Selbstverständlich ist es auch möglich, anstelle von Referenz-Objekten 36.1, 36.2 spezielle Referenz-Sender vorzusehen. Bei einer Infrarotsensorik können in analoger Weise die Referenz-Objekte 36.1, 36.2 zwei Heizquellen sein.

Der Einsatz von mehreren Sensoren innerhalb eines Überwachungsgebiets bringt es mit sich, dass sich die Messräume der einzelnen Sensoren teilweise überlappen, d.h. dass für gewisse Bereiche des Überwachungsgebiets eine aktive Redundanz vorliegt. Diese Tatsache kann ebenfalls für die Selbstüberwachung der Sensorik beigezogen werden. Sofern in einem solchen durch zwei (oder mehr) Sensoren überwachten Bereich nur durch einen Sensor ein Signal empfangen wird, bedeutet dies, dass eine Störung in der Sensorik vorhanden ist.

Es muss beachtet werden, dass sich die mechanische und/oder sensorische Schutzeinrichtung nicht nur mit horizontal bewegten Ballenabtragmaschinen einsetzen lässt. Sofern sich das Abtragorgan entlang einer geneigten Fläche bewegt, ist es auch hier wesentlich, dass die Sensorik so ausgelegt ist, dass der Überwachungsbereich keine Toträume aufweist.

## Patentansprüche

1. Ballenabtragmaschine (1) mit einem auf Schienen (11) fahrbaren Maschinengestell (3) mit einem daran auf- und abbewegbaren Abtragorgan (4) und mit Schutzmittel, die ein Überwachungsgebiet (19.1,19.2,19.3), mindestens teilweise um das Abtragorgan (4) herum, abschirmen, dadurch gekennzeichnet, dass
die Schutzmittel Sensoren sind, welche am Maschinengestell (3) direkt und/oder am Abtragorgan (4) derart vorgesehen sind, dass das Überwachungsgebiet (19.1,19.1,19.3) unmittelbar am Abtragorgan (4) vorgesehen und mit diesem bewegbar ist, und, dass eine Auswertvorrichtung (87) vorgesehen ist, welche aufgrund der reflektierten Sensorsignale zwischen einem Gegenstand (16) und der Umgebung, beispielsweise des Bodens (35) oder anderer Reflektoren (23), unterscheidet.

2. Ballenabtragmaschine nach Anspruch 1, dadurch gekennzeichnet, dass
die Schutzmittel an der dem Maschinengestell gegenüberliegenden Stirnseite (47) des Abtragorganes (4) vorgesehen sind und, dass das Überwachungsgebiet (19.3) auf dieser Seite des Abtragorganes (4) gebildet wird.

3. Ballenabtragmaschine nach Anspruch 2, dadurch gekennzeichnet, dass
die Schutzmittel derart am Maschinengestell (3) vorgesehen sind, dass die Überwachungsgebiete (19.1,19.2) beidseits des Abtragorganes (4) gebilet werden.

4. Ballenabtragmaschine nach Anspruch 1, dadurch gekennzeichnet, dass
die Schutzmittel an der dem Maschinengestell (3) gegenüberliegenden Stirnseite des Abtragorganes (4) und derart am Maschinengestell (3) vorgesehen sind, dass die Überwachungsgebiete (19.1,19.2,19.3) um das Abtragorganes (4) herum gebildet werden.

5. Ballenabtragmaschine gemäss Anspruch 2 und/oder 3, dadurch gekennzeichnet, dass
die Schutzmittel Licht- oder Ultraschallsender (91) und Licht- oder Ultraschallempfänger (92) sind.

6. Ballenabtragmaschine nach Anspruch 2 und/oder 3, dadurch gekennzeichnet, dass
die Schutzmittel Infrarotsensoren (85) sind.

7. Ballenabtragmaschine nach Anspruch 5, dadurch gekennzeichnet, dass
Reflektoren (78) verwendet werden, um die Strahlung der Sender (91) aufzuspreizen.

## Claims

1. A fibre bale opener (1) with a machine frame (3) movable on rails (11) with an opening member (4) upwardly and downwardly movable thereon and with safety means which protect a monitored area (19.1, 19.2, 19.3) at least partly around the opening member (4), characterized in that the safety means are sensors which are provided directly on the machine frame (3) and/or on the opening member (4) in such a way that the monitored area (19.1, 19.2, 19.3) is provided directly on the opening member (4) and is movable with said member and that an evaluating apparatus (87) is provided which distinguishes on the basis of the reflected sensor signals between an object (16) and the environment, for example the floor (35) or other reflectors (23).

2. A fibre bale opener as claimed in claim 1, characterized in that the safety means are provided on the front side (47) of the opening member (4), which front side is opposite of the machine frame, and that the monitored area (19.3) is formed on this side of the opening member (4).

3. A fibre bale opener as claimed in claim 2, characterized in that safety means are provided on the machine frame (3) in such a way that the monitored areas (19.1, 19.2) are formed on both sides of the opening member (4).

4. A fibre bale opener as claimed in claim 1, characterized in that the safety means are provided on the front side of the opening member (4), which front side is opposite of the machine frame (3), and attached to the machine frame (3) in such a way that the monitored areas (19.1, 19.2, 19.3) are formed around the opening member (4).

5. A fibre bale opener as claimed in claim 2 and/or claim 3, characterized in that the safety means are light or ultrasonic transmitters (91) and light or ultrasonic receivers (92).

6. A fibre bale opener as claimed in claims 2 and/or claim 3, characterized in that the safety means are infrared sensors (85).

7. A fibre bale opener as claimed in claim 5, characterized in that reflectors are used to expand the beam of the transmitter (91).

## Revendications

1. Machine de prélèvement de balles (1) possédant un bâti de machine (3) déplaçable sur rails (11) avec un organe de prélèvement (4) mobile en monte et baisse sur celui-ci, et avec des moyens de protection qui couvre une zone de surveillance (19.1, 19.2, 19.3), au moins partiellement autour de l'organe de prélèvement (4),
caractérisée par le fait que
les moyens de protection sont des détecteurs qui sont prévus directement sur le bâti de machine (3) et/ou sur l'organe de prélèvement (4), de telle manière que la zone de surveillance (19.1, 19.2, 19.3) est prévue directement auprès de l'organe de prélèvement (4) et est mobile avec celui-ci, et qu'un dispositif d'évaluation (87) est prévu et qui différencie entre un objet (16) et l'environnement, par exemple le sol (35) ou autres réflecteurs (23), en vertu des signaux réfléchis du détecteur.

2. Machine de prélèvement de balles selon revendication 1,
caractérisée par le fait que
les moyens de protection sont prévus sur la face frontale (47) de l'organe de prélèvement (4) située du côté opposé du bâti de machine, et que la zone de surveillance (19.3) est formée de ce côté de l'organe de prélèvement (4).

3. Machine de prélèvement de balles selon revendication 2,
caractérisée par le fait que
les moyens de protection sont prévus sur le bâti de machine (3) de telle manière que les zones de surveillance (19.1, 19.2) sont formées sur les deux côtés de l'organe de prélèvement (4).

4. Machine de prélèvement de balles selon revendication 1,
caractérisée par le fait que
les moyens de protection sont prévus sur la face frontale de l'organe de prélèvement (4) située du côté opposé du bâti de machine (3) et sur le bâti de machine (3) de telle manière que les zones de surveillance (19.1, 19.2, 19.3) sont formées autour de l'organe de prélèvement (4).

5. Machine de prélèvement de balles selon revendication 2 et/ou 3,
caractérisée par le fait que
les moyens de protection sont des émetteurs de lumière ou d'ultrason (91) et des récepteurs de lumière ou d'ultrason (92).

6. Machine de prélèvement de balles selon revendication 2 et/ou 3,
caractérisée par le fait que
les moyens de protection sont des détecteurs infrarouge (85).

7. Machine de prélèvement de balles selon revendication 5,
caractérisée par le fait que
des réflecteurs (78) sont utilisés, afin d'élargir le rayonnement des émetteurs (91).
